# EUROPEAN PATENT APPLICATION

(11) **EP 0 894 812 A1**
(43) Date of publication of application: **03.02.1999**
(21) Application number: 98112718.6
(22) Date of filing: 09.07.1998
(51) Int. Cl.: C08F 283/06, C08F 290/14, C08G 18/63

(54) **Reinforcing graft polymers made in perfluorocarbon fluids**

(30) Priority: 29.07.1997 US 902384
(71) Applicant: BASF CORPORATION, Mount Olive, New Jersey 07828-1234 (US)
(72) Inventor: Davis, John E., Woodhaven, MI 48183 (US)
(74) Representative: Meyer, Udo

(57) **Abstract**

Substantially solid reinforcing graft polymers are prepared by polymerizing an ethylenically unsaturated monomer (or mixture of ethylenically unsaturated monomers) with a composition comprising a polyol including a positive amount up to about 1.6 equivalent weight of induced unsaturation per mole of polyol, a free radical initiator and, optionally, an effective amount of a reaction moderator in a perfluorocarbon fluid. The resulting reinforcing graft polymers are particularly useful for polyol dispersions used in the production of polyurethanes having enhanced physical properties such as load bearing or hardness, tensile strength and tear resistance for example.

## Description

The present invention relates to reinforcing graft polymers generally, and more particularly, to reinforcing graft polymers prepared in a perfluorocarbon fluid.

Reinforcing graft polymers (RGP's) are readily dispersable in conventional polyols and give stable suspensions of the solid in the liquid phase. Generally, RGP's are terpolymers consisting of monomers such as styrene and acrylonitrile with a third functionalized monomer also referred to as a macromer. The functionalized monomer is generally in the form of a polyol including a covalently bonded unsaturated moiety such as a fumarate ester for example. The three monomers polymerize randomly through their unsaturated or "vinyl" groups by a free radical mechanism to form higher molecular weight polymers including a polystyrene-acrylonitrile phase which forms into a particle with a covalently attached polyether phase.

Reinforcing graft polymers *per se* have been known for years. For example, U.S. Patent No. 4,093,573 to Ramlow et al. discloses a polymer dispersion prepared by blending a hydroxyl-containing finely-divided solid polymer with a polyol. The hydroxy-containing solid polymer is prepared by polymerizing, in the presence of a free radical catalyst and an organic solvent, such as aliphatic alcohols, a major amount of an ethylenically unsaturated monomer or mixture of monomers and a minor amount of a hydroxy-terminated organic compound having from one to eight hydroxyl groups, an equivalent weight of from 500 to 10,000 and containing a polymerizable carbon-to-carbon double bond.

U.S. Patent Nos. 3,823,201 and its reissued version RE 29,014 to Pizzini et al. discloses a highly stable graft copolymer dispersion prepared by the *in situ* polymerization in the presence of a free radial catalyst of a vinyl monomer in a polyol containing from about 0.10 to 0.70 mole of unsaturation per mole of polyol. The resulting dispersions are low viscous liquids which can be employed in the preparation of flexible urethane foams.

Yet another graft polymer dispersion is disclosed in U.S. Patent No. 4,454,255 now reissued as RE 33,291 also to Ramlow et al. Under this reference, low viscosity "white" graft polymer dispersions are prepared by free radical polymerization of an ethylenically unsaturated monomer or mixture of monomers in a polyol mixture containing less than 0.1 mole of induced unsaturation per mole of polyol mixture. The above described process is said to yield stable, non-settling dispersions with graft polymer contents of 30 percent by weight and higher employing monomer mixtures which contain more than about 55 percent by weight styrene as the comonomer.

Of the known RGP's, most utilize a relatively high quantity of 2-propanol i.e. 75-100% of the monomer charge, as a reaction medium, although some emulsion polymerization work employing water as a solvent has been done. To form a polyol dispersion, an RGP dispersion in 2-propanol is mixed with a polyol and stripped at elevated temperatures and reduced pressures under agitation. Thereafter, any remaining traces of the 2-propanol should be removed. However, removal of the 2-propanol without causing damage to the polyol dispersion has proven difficult. Worse yet, traces of alcohol remaining in the foam mixture can present serious problems. For example, low molecular weight monohydroxyl compounds can react with isocyanate, which is often undesirable. With regard to emulsion polymerized RGP's, water is even harder to remove than alcohol, and foaming becomes a problem as the last traces are removed.

In addition to the foregoing, a perceived drawback with regard to many of the know graft polyols is the fairly limited numbers and types of monomers which can be employed. For example, certain monomers such as vinylidene chloride require reaction temperatures in excess of about 100° C in order to obtain good conversion to polymer. However, such a relatively high processing temperature tends to cause the vinylidene chloride to lose hydrogen chloride and turn dark which is highly undesirable.

To form RGP dry powders, as opposed to the above described polyol dispersions, high alcohol content polymer dispersions have been employed wherein upon removing the alcohol, a relatively stiff paste is produced. The paste is thereafter spray dried which gives rise to a powder exhibiting relatively minor polymer damage, but resulting in high processing costs.

Recently perfluorocarbon fluids have been proposed for use as a suspension polymerization media according to an article appearing in "Macromolecules" 1996, 29, 2813-1817 by Zhu. According to the article, certain cross-linked polymer beads are obtainable by suspending mono- and difunctional monomers and initiators in perfluorocarbon fluids. The use and function of additives which serve as a dispersant for the monomers in the perfluorocarbon fluid are discussed.

While the use of perfluorocarbon fluids as a suspension polymerization media to obtain cross-linked polymer beads is thus known in the art, to date the inventor is unaware of any suggestions in the art relating to substantially or wholly noncross-linked reinforcing graft polymers formed in perfluorocarbon fluids. In particular, there does not appear to be any suggestion in the art relating to graft polymers formed in perfluorocarbon fluids which have a covalently bonded hydroxyl terminated polyether on the surface of the polymer bead which allows the polymer particles to form stable dispersions in a continuous phase of polyether polyol.

In polyurethane foam formulations, it is this hydroxyl termination of the covalently bonded polyether layer which allows the polymer particles to become part of the polyurethane matrix and impart reinforcement characteristics. In the absence of this hydroxyl functionality, the resulting polymer particles would be inert and merely serve as a filler with little or no reinforcement capability.

Thus, there appears to be a need in the art for the cost effective production of reinforcing graft polymers, particularly in powder form, which can be stored for extended periods of time and added to a polyol composition as needed to accomplish the desired objective such as reinforcement of the resulting foam or cell opening, for example.

The present invention therefore relates to both the product and the process of forming reinforcing graft polymers comprising the step of polymerizing an ethylenically unsaturated monomer (or mixture of ethylenically unsaturated monomers) in the presence of a composition comprising a polyol including a positive amount up to about 1.6 equivalent weight of induced unsaturation per mole of polyol, a free radical initiator and, optionally, an effective amount of a reaction moderator in a perfluorocarbon fluid. The resulting RPG which is generally in the form of an agglomerated powder, is recovered by filtration at which time the agglomerated powder may readily be broken down to a fine powder. Further, as an added benefit, the unreacted monomers can be decanted along the perfluorocarbon fluid and thereafter separated for reintroduction into the processing stream, if so desired.

The present invention also relates to reinforcing graft polymer particles including a covalently bonded hydroxyl terminated polyether on the surface of the polymer which allows the polymer particles to form stable dispersions in a continuous phase of polyether polyol. the dispersions are considered to be particularly useful for the formation of polyurethane foams

In accordance with the teachings of the present invention, a process for the preparation of solid reinforcing graft polymers comprises the step of polymerizing at least one ethylenically unsaturated monomer or mixture of monomers in the presence of a composition comprising a polyol including a positive amount up to about 1.6 equivalent weight of induced unsaturation per mole of polyol, a free radical initiator and optionally an effective amount of a reaction moderator in a perfluorocarbon fluid. Upon formation of the reinforcing graft polymer in the perfluorocarbon fluid, the polymer is recoverable by simple filtration. By the phrase "a positive amount", it is meant that the polyol will include a certain number of equivalents of unsaturation above 0.0% such as at least 0.001%, for example.

By definition, perfluorocarbon fluids are perfluorinated and saturated aliphatic compounds which include perfluoroalkanes, perfluoroalkylethers and perfluoroalkylamines. Each of the compounds are stable and very inert, and most organic compounds are not soluble in them. According to the present invention, the perfluorocarbon fluids offer a unique way to maintain fluidity in the reaction mixture and facilitate heat transfer, without becoming involved in the reaction. The reactants are mutually soluble, one with the other, but insoluble in the perfluorocarbon fluid. Thus, the reaction mixture disperses in the perfluorocarbon fluid and the polymerization reactions occurs in these dispersed droplets.

With regard to reactants, the polyol component will preferably include a polyetherester polyol prepared by the reaction of a polyoxyalkylene polyether polyol with maleic anhydride and an alkylene oxide. This polyetherester polyol is isomerized by methods well known by those skilled in the art. These include heat, or isomerization catalysts such as morpholine, dibutylamine, diethylamine, diethanolamine, thiols and the like. The polyetherester polyol may additionally be prepared by the reaction of a polyoxyalkylene ether polyol, a polycarboxylic acid anhydride to form a half acid ester and an alkylene oxide to obtain a product having an acid number of less than 5 mg KOH/gram which comprises conducting the reaction between the polyoxyalkylene polyether polyol and the anhydride and the following reaction with the alkylene oxide in the presence of an effective amount of a catalyst selected from the group consisting of salts and oxides of divalent metals. The polyols having induced unsaturation are hereinafter referred to as "macromers." Chain transfer agents may be employed as reaction moderators particularly at temperatures below 105° C. The polymerization reaction may be carried out at temperatures between about 25° C and 180° C. The polyol component contains up to about 1.6 equivalents of unsaturation per mole of polyol. Preferably the polyol component ranges from 0.45 to 1.5 equivalents of unsaturation, and still more preferably 0.9 to 1.1 equivalents of unsaturation per mole of polyol.

In addition to obtaining a storage stable powdered RPG, it is contemplated that a broader range of monomers can be employed under the present invention as compared to those utilized in known graft polyol processes. Still other objects and advantages of the present invention will become apparent upon review of the following detailed description and appended claims.

The alkylene oxides which may be employed for the preparation of the polyetherester polyols include ethylene oxide, propylene oxide, butylene oxide, amylene oxide and mixtures of these oxides.

The reinforcing graft polymers of this invention range in physical appearance from finely divided dry powders to coarse pasty agglomerates.

Among the chain transfer agents, otherwise referred to herein as reaction moderators, which may be employed are: acetic acid, bromoacetic acid, chloroacetic acid, ethyl dibromoacetate, iodoacetic acid, tribromoacetic acid, ethyl tribromoacetate, trichloroacetic acid, ethyl trichloroacetate, acetone, p-bromophenylacetonitrile, p nitrophenylacetylene, allyl alcohol, 2,4,6 trinitroaniline, p ethynylanisole, 2,4,6trinitroanisole, azobenzene, benzaldehyde, p cyanobenzaldehyde, 2 butylbenzene, bromobenzene, 1,3,5 trinitrobenzene, benzochrysene, ethyl trinitrobenzoate, benzoin, benzonitrile, benzopyrene, tributylborane, 1,4-butanediol, 3,4 epoxy 2 methyl l butene, t butyl ether, t butyl isocyanide, I phenylbutyne, p cresol, p bromocumene, dibenzonaphthacene, p dioxane, pentaphenyl ethane, ethanol, I,I diphenylethylene, ethylene glycol, ethyl ether, fluorene, N,N dimethylformamide, 2 heptene, 2 hexene, isobutyraidehyde, diethyl bromomalonate, bromotrichloromethane, dibromoethane, diiodomethane, naphthalene, 1 naphthol, 2 napthol, methyl oleate, 2,4,4 triphenyl l pentene, 4 methyl-2 pentene, 2,6 diisopropylphenol, phenyl ether, phenylphosphine, diethylphosphine, dibutylphosphine, phosphorus trichloride, 1,1,1 tribromopropane, dialkyl phthalate, 1,2 propanediol, 3 phosphinopropionitrile, I propanol, pyrocatechol, pyrogallol, methyl stearate, tetraethylsilane, triethylsilane, dibromostilbene, α-bromostyrene, α methylstyrene, tetraphenyl succinonitrile, 2,4,6 trinitrotoluene, p toluidine, N,N dimethyl ptoluidine, α cyano p tolunitrile, α,α' dibromo p xylene, 2,6 xylenol, diethyl zinc, dithiodiacetic acid, ethyl dithiodiacetic acid, 4,V dithio bisanthranilic acid, benzenethiol, o ethoxybenzenethiol, 2,2' dithiobisbenzothiazole, benzyl sulfide, 1 dodecanethiol, ethanethiol, 1 hexanethiol, 1 napthalenethiol, 2 naphthalenethiol, I octanethiol, 1 heptanethiol, 2 octanethiol, 1 tetradecanethiol, α toluenethiol, isopropanol, 2 butanol, carbon tetrabromide and tertiary dodecyl mercaptan.

The chain transfer agents employed will depend on the particular monomers or mixtures of monomers employed and the molar ratios of such mixtures. The concentration of the chain transfer agent which is employed may range from about 2.0 to 10.0 percent by weight based on the weight of monomer.

Representative polyols essentially free from ethylenic unsaturation which may be employed in combination with the macromers of the invention are well known to those skilled in the art. They are often prepared by the catalytic condensation of an alkylene oxide or mixture of alkylene oxides either simultaneously or sequentially with an organic compound having at least two active hydrogen atoms, such as is described in U.S. Pat. Nos. 1,922,459; 3,190,927; and 3,346,557. Representative polyols include polyhydroxyl containing polyesters, polyoxyalkylene polyether polyols, polyhydroxy termiseated polyurethane polymers, polyhydroxyl containing phosphorus compounds, and alkylene oxide adducts of polyhydric polythioesters, polyacetals, aliphatic polyols and thiols, ammonia, and amines including aromatic, aliphatic, and heterocyclic amines, as well as mixtures thereof. Alkylene oxide adducts of compounds which contain 2 or more different groups within the above defined classes may also be used, for example, amino alcohols which contain an amino group and a hydroxyl group. Also, alkylene oxide adducts of compounds which contain one SH group and one OH group as well as those which contain an amino group and an SH group may be used. Generally, the equivalent weight of the polyols will vary from 100 to 10,000, preferably from 1000 to 3000.

Any suitable hydroxy terminated polyester may be used such are prepared, for example, from polycarboxylic acids and polyhydric alcohols. Any suitable polycarboxylic acid may be used such as oxalic acid, maIonic acid, succinic acid, glutamic acid, adipic acid, pimelic acid, suberic acid, azelaic acid, sebacic acid, brassylic acid, thapsic acid, maleic acid, fumaric acid, glutaconic acid, α hydromuconic acid, β hydromuconic acid, α butyl α ethyl glutaric acid, α,β diethylsuccinic acid, isophthalic acid, terephthalic acid, hemimellitic acid, and 1,4 cyclohexanedicarboxylic acid. Any suitable polyhydric alcohol, including both aliphatic and aromatic, may be used such as ethylene glycol, propylene glycol, trimethylene glycol, 1,2 butanediol, 1,3-butanediol, 1,4 butanediol, 1,2 pentanediol, 1,4 pentanediol, 1,5 pentanediol, 1,6 hexanediol, 1,7 heptanediol, glycerol, 1,1,1 trimethylolpropane, 1,1,1-trimethylolethane, 1,2,6 hexanetriol, α methyl glycoside, pentaerythritol, and sorbitol. Also included within the term "polyhydric alcohol" are compounds derived from phenol such as 2,2 bis(4 hydroxyphenyl)propane, commonly known as Bisphenol A.

The hydroxyl containing polyester may also be a polyester amide such as is obtained by including some amine or amino alcohol in the reactants for the preparation of the polyesters. Thus, polyester amides may be obtained by condensing an amino alcohol such as ethanolamine with the polycarboxylic acids set forth above or they may be made using the same components that make up the hydroxyl containing polyester with only a portion of the components being a diamine such as ethylene diamine.

Any suitable polyoxyalkylene polyether polyol may be used such as the polymerization product of an alkylene oxide or a mixture of alkylene oxides with a polyhydric alcohol. Any suitable polyhydric alcohol may be used such as those disclosed above for use in the preparation of the hydroxy terminated polyesters. Any suitable alkylene oxide may be used such as ethylene oxide, propylene oxide, butylene oxide, amylene oxide, and mixtures of these oxides. The polyoxyalkylene polyether polyols may be prepared from other starting materials such as tetrahydrofuran and alkylene oxide tetrahydrofuran mixtures; epihalohydrins such as epichlorohydrin; as well as aralkylene oxides such as styrene oxide. The polyoxyalkylene polyether polyols may have either primary or secondary hydroxyl groups. Included among the polyether polyols are polyoxyethylene glycol, polyoxypropylene glycol, polyoxybutylene glycol, polytetramethylene glycol, block copolymers, for example, combinations of polyoxypropylene and polyoxyethylene glycols, poly 1,2 oxybutylene and polyoxyethylene glycols, poly 1,4 oxybutylene and polyoxyethylene glycols, and random copolymer glycols prepared from blends of two or more alkylene oxides or by the sequential addition of two or more alkylene oxides. The polyoxyalkylene polyether polyols may be prepared by any known process such as, for example, the process disclosed by Wurtz in 1859 and Encyclopedia of Chemical Technology, Vol. 7, pp. 257 262, published by Interscience Publishers, Inc. (1951) or in U.S. Pat. No. 1,922,459. Polyethers which are preferred include the alkylene oxide addition products of trimethylolpropane, glycerine, pentaerythritol, sucrose, sorbitol, propylene glycol, and 2,2' (4,4'hydroxyphenyl)propane and blends thereof having equivalent weights of from 100 to 5000.

Suitable polyhydric polythioethers which may be condensed with alkylene oxides include the condensation product of thiodiglycol or the reaction product of a dicarboxylic acid such as is disclosed above for the preparation of the hydroxyl containing polyesters with any other suitable thioether glycol.

Polyhydroxyl containing phosphorus compounds which may be used include those compounds disclosed in U.S. Pat. No. 3,639,542. Preferred polyhydroxyl containing phosphorus compounds are prepared from alkylene oxides and acids of phosphorous having a P₂0₅ equivalency of from about 72 percent to about 95 percent.

Suitable polyacetals which may be condensed with alkylene oxides include the reaction product of formaldehyde or other suitable aldehyde with a dihydric alcohol or an alkylene oxide such as those disclosed above.

Suitable aliphatic thiols which may be condensed with alkylene oxides include alkanethiols containing at least two SH groups such as 1,2 ethanedithiol, 1,2propanedithiol, 1,3 propanedithiol, and 1,6 hexanedithiol; alkene thiols such as 2 butene 1,4 dithiol; and alkyne thiols such as 3 hexyne 1,6 dithiol.

Suitable amines which may be condensed with alkylene oxides include aromatic amines such as aniline, o chloroaniline, p aminoaniline, 1,5 diaminoaphthalene, methylene dianiline, the condensation products of aniline and fornaldehyde, and 2,3 2,6 , 3,4 , 2,5 , and 2,4 diaminotoluene; aliphatic amines such as methylamine, triisopropanolamine, ethylenediamine, 1,3-diaminopropane, 1,3 diaminobutane, and 1,4-diaminobutane.

Also, polyols containing ester groups can be employed in the subject invention. These polyols are prepared by the reaction of an alkylene oxide with an organic dicarboxylic acid anhydride and a compound containing reactive hydrogen atoms. A more comprehensive discussion of these polyols and their method of preparation can be found in U.S. Pat. Nos. 3,585,185; 3,639,541 and 3,639,542.

The unsaturated polyols or macromers which are employed in the present invention may be prepared by the reaction of any conventional polyol such as those described above with an organic compound having both ethylenic unsaturation and a hydroxyl, carboxyl, anhydride, isocyanate or epoxy group or they may be prepared by employing an organic compound having both ethylenic unsaturation and a hydroxyl, carboxyl, anhydride, or epoxy group as a reactant in the preparation of the conventional polyol. Representative of such organic compounds include unsaturated mono and polycarboxylic acids and anhydrides such as maleic acid and anhydride, fumaric acid, crotonic acid and anhydride, propenyl, succinic anhydride, acrylic acid, acryoyl chloride, hydroxy ethyl acrylate or methacrylate and halogenated maleic acids and anhydrides, ethyl fumaryl chloride, unsaturated polyhydric alcohols such as 2 butene 1,4 diol, glycerol allyl ether, trimethylolpropane allyl ether, pentaerythritol allyl ether, pentaerythritol vinyl ether, pentaerythritol diallyl ether, and 1 butene 3,4 diol, unsaturated epoxides such as I vinylcyclohexene 3,4epoxide, butadiene monoxide, vinyl glycidyl ether(1-vinyloxy 2,3 epoxy propane), glycidyl methacrylate and 3 allyloxvpropylene oxide (allyl glycidyl ether). If a polycarboxylic acid or anhydride is employed to incorporate unsaturation into the polyols, it is preferable to react the unsaturated polyol with an alkylene oxide, preferably ethylene or propylene oxide, to replace the carboxyl groups with hydroxyl groups prior to employment in the present invention. The amount of alkylene oxide employed is such as to reduce the acid number of the unsaturated polyol to about 5 or less.

The maleated macromers are isomerized at temperatures ranging from 80° C. to 120° C. for one half hour to three hours in the presence of an effective amount of an isomerization catalyst. The catalyst is employed at concentrations greater than 0.01 weight percent based on the weight of the macromer.

When preparing the polyetherester polyol employing the catalyst selected from the group consisting of salts and oxides of divalent metals, the concentration of catalyst which may be employed ranges from 0.005 to 0.5 weight percent based on the weight of polyol mixture. The temperatures employed range from 75° C. to 175° C. The equivalent weight of the macromer may vary from 1000 to 10,000, preferably from 2000 to 6000.

Among the divalent metals which may be employed are: zinc acetate, zinc chloride, zinc oxide, zinc neodecanoate, tin chloride, calcium naphthenate, calcium chloride, calcium oxide, calcium acetate, copper naphthenate, cadmium acetate, cadmium chloride, nickel chloride, manganese chloride, and manganese acetate.

Certain of the above mentioned catalysts such as calcium naphthenate promote the isomerization of the maleate to the structure during the preparation of the macromer, while others such as zinc chloride, which is an effective catalyst for the polymerization, inhibit this isomerization.

As mentioned above, the reinforcing graft polymers of the invention are prepared by polymerizing an ethylenically unsaturated monomer or a mixture of ethylenically unsaturated monomers in a perfluorocarbon fluid. Representative ethylenically unsaturated monomers which may be employed in the present invention include butadiene, isoprene, 1,4 pentadiene, 1,6 hexadiene, 1.7 octadiene, styrene, α methylstyrene, 2 methylstyrene, 3 methylstyrene and 4 methylstyrene, 2,4 dimethylstyrene, ethylstyrene, isopropylstyrene, butylstyrene, phenylstyrene, cycioexylstyrene, benzylstyrene, and the like; substituted styrenes such as cyanostyrene, nitrostyrene, N,N dimethylaminostyrene, acetoxystyrene, methyl 4 vinylbenzoate, phenoxystyrene, p vinylphenyl oxide, and the like; the acrylic and substituted acrylic monomers such as acrylonitrile, acrylic acid, methacrylic acid, methyl acrylate, 2 hydroxyethyl acrylate, methyl methacrylate, cyclohexyl methacrylate, benzyl methacrylate, isopropyl methacrylate, octyl methacrylate, methacrylonitrile, ethyl a ethoxyacrylate, methyl α acetaminoacrtylate, butyl acrylate, 2-ethythexyl acrylate, phenyl acrylate, phenyl methacrylate, N,N-dimethylacrylamide, N,N dibenzylacrylamide, N butylacrylamide, methacrylyl formamide, and the like; the vinyl esters, vinyl ethers, vinyl ketones, etc., such as vinyl acetate, vinyl butyrate, isopropenyl acetate, vinyl formate, vinyl acrylate, vinyl methacrylate, vinyl methoxyacetate, vinyl benzoate, vinyltoluene, vinylnaphthalene, vinyl methyl ether, vinyl ethyl ether, vinyl propyl ethers, vinyl butyl ethers, vinyl 2 ethylhexyl ether, vinyl phenyl ether, vinyl 2 methoxyethyl ether, methoxybutadiene, vinyl 2 butoxyethyl ether, 3,4 dihydro 1,2 pyran, 2 baptize 2' vinyloxy diethyl ether, vinyl methyl ketone, vinyl ethyl ketone, vinyl phosphonates such as vinyl phenyl ketone, vinyl ethyl sulfone, N methyl N vinyl acetamide, N vinylpyrrolidone, vinyl imidazole, divinyl sulfoxide, divinyl sulfone, sodium vinylsulfonate, methyl vinylsulfonate, N vinyl pyrrole, and the like; dimethyl fumarate, dimethyl maleate, maleic acid, crotonic acid, fumaric acid, itaconic acid, monomethyl itaconate, tbutylaminoethyl methacrylate, dimethylaminoethyl methacrylate, glycidyl acrylate, allyl alcohol, glycol monoesters of itaconic acid, vinyl pyridine, and the like. Any of the known polymerizable monomers can be used and the compounds listed above are illustrative and not restrictive of the monomers suitable for use in this invention. Preferably, at least 55.0 weight percent of and up to 100.0 weight percent of the monomer employed is selected from the group consisting of styrene,4-methylstyrene, acrylonitrile, vinylidene chloride and mixtures thereof.

The amount of ethylenically unsaturated monomer employed in the polymerization reaction is generally from 50.0 percent to 80.0 percent, and more preferably from about 65.0 percent to about 75.0 percent based on the total weight of the polymer. The polymerization occurs at a temperature between about 25° C. and 180°C., preferably from 80° C. to 135° C.

Illustrative polymerization initiators which may be employed are the well known free radical types of vinyl polymerization initiators such as the peroxides, persulfates, perborates, percarbonates, azo compounds, etc. These include hydrogen peroxide, dibenzoyl peroxide, acetyl peroxide, benzoyl hydroperoxide, t butyl hydroperoxide, di t butyl peroxide, lauroyl peroxide, butyryl peroxide, diisopropylbenzene hydroperoxide, cumene hydroperoxide, paramenthane hydroperoxide, diacetyl peroxide, di α cumyl peroxide, dipropyl peroxide, diisopropyl peroxide, isopropyl t butyl peroxide, butyl t-butyl peroxide, difuroyl peroxide, bis(triphenylmethyl) peroxide, bis(p methoxybenzoyl)peroxide, p monomethoxybenzoyl peroxide, rubene peroxide, ascaridol, t butyl peroxybenzoate, diethyl peroxyterephthalate, propyl hydroperoxide, isopropyl hydroperoxide, n-butyl hydroperoxide, t butyl hydroperoxide, cyclohexyl hydroperoxide, trans decal in hydroperoxide, α-methylbenzyl hydroperoxide, α methyl α ethyl benzyl hydroperoxide, tetralin hydroperoxide, triphenylmethyl hydroperoxide, diphenylmethyl hydroperoxide, α,α' azobis (2 methyl heptonitrile), 1, 1' azo bis(cyclohexane carbonitrile), 4,4' azobis(4 cyanopentanoic acid), 2,2' azobis(isobutyronitrile), 1 t butylazo 1-cyanocyclohexane, persuccinic acid, diisopropyl peroxy dicarbonate, 2,2' azobis(2,4 dimethylvaleronitrile), 2 t butylazo 2 cyanomethyloxymethylpentane, 2,2'azobis 2 methylbutanenitrile, 2 t butylazo 2 cyanobutane, 1 t amylazo l cyanocyclohexane, 2,2' azobis(2,4dimethylmethoxyvaleronitrile, 2,2' azobis 2 methylbutyronitrile, 2 t butylazo 2 cyano-4-methylpentane, 2 t butylazo 2 isobutyronitrile, to butylperoxyisopropyl carbonate and the like; a mixture of initiators may also be used. The preferred initiators are 2,2' azobis(2methylbutyronitrile), 2,2' azobis(isobutyronitrile), 2,2'azobis(2,4 dimethylvaleronitrile), 2 t butylazo 2 cyano-4 methoxy-4-methylpentane, 2 t butylazo 2 cyano methylpentane, 2 t butylazo 2 cyano butane and lauroyl peroxide. Generally, from about 0.1 percent to about 10 percent, preferably from about I.0 percent to about 4.0 percent, by weight of initiator based on the weight of the monomer will be employed in the process of the invention.

The perfluorocarbon fluids which are considered to be particularly useful include perfluoroalkanes, perfluoroalkylethers and perfluoroalkylamines, but the perfluoroalkanes are preferred because they are more readily available and possess the required properties of chemical inertness and stability. They are available in a wide variety of boiling ranges and are selected so as to match their reflux temperature with the desired reaction temperature. One source of suitable perfluorocarbon fluids are the Fluorinert® liquids from 3M Industrial Products Division. While it is thought that these are mixtures of perfluoroalkanes rather than a pure compound, it is believed to be the boiling point range and not necessarily the purity that is important.

Polyurethane foams may be formed utilizing the reinforcing graft polymers of the present invention. The polyurethane foams are formed by reacting the reinforcing graft polymers with an organic polyisocyanate in the presence of a blowing agent and optionally in the presence of additional polyhydroxyl containing components, chain extending agents, catalysts, surface active agents, stabilizers, dyes, idlers and pigments. Suitable processes for the preparation of cellular polyurethane plastics are disclosed in U.S. Pat. No. Re. 24,514 together with suitable machinery to be used in conjunction therewith. When water is added as the blowing agent, corresponding quantities of excess isocyanate to react with the water and produce carbon dioxide may be used. It is possible to proceed with the preparation of the polyurethane plastics by a prepolymer technique wherein an excess of organic polyisocyanate is reacted in a first step with the reinforcing graft polymer of the present invention to prepare a prepolymer having free isocyanate groups which is then reacted in a second step with water and/or polyol to prepare a foam. Alternatively, the reinforcing graft polymer can be added to a polyol composition to form a dispersion in a continuous phase polyol. Thereafter, the polyol dispersion can be added to an isocyanate composition to form a polyurethane foam. Still another option is adding the reinforcing graft polymer to the polyol components in a single working step commonly known as the "one shot" technique of preparing polyurethanes. Furthermore, instead of water, low boiling hydrocarbons such as pentane, hexane, heptane, pentane, and heptane; azo compounds such as azohexahydrobenzodinitrile, halogenated hydrocarbons such as dichlorodifluoromethane, trichlorofluoromethane, dichlorodifluoroethane, vinylidene chloride, and methylene chloride may be used as blowing agents.

Organic polyisocyanates which may be employed include aromatic, aliphatic, and cycloaliphatic polyisocyanates and combinations thereof. Representative of these types are the diisocyanates such as m phenylene diisocyanate, 2,4 toluene diisocyanate, 2,6 toluene diisocyanate, mixtures of 2,4 and 2,6 toluene diisocyanate, hexamethylene diisocyanate, tetramethylene diisocyanate, cyclohexane 1,4 diisocyanate, hexahydrotolscene diisocyanate (and isomers), naphthalene 1,5diisocyanate, 1 methoxyphenyl 2,4 diisocyanate, 4,4'diphenylmethane diisocyanate, 4,4 biphenylene diisocyanate, 3,3' dimethoxy 4,4 biphenyl diisocyanate,3,3'dimethyl 4,4' biphenyl diisocyanate and 3,3' dimethyldiphenylmethane 4,4' diisocyanate; the triisocyanates such as 4,4',4'' triphenylmethane triisocyanate, and toluene 2,4,6 triisocyanate; and the tetraisocyanates such as 4,4'-dimethyldiphenylmethane 2,2' 5,5, tetraisocyanate and polymeric polyiscocyanates such as polymethylene polyphenylene polyisocyanate. Especially useful due to their availability and properties are toluene diisocyanate, 4,4' diphenylmethane diisocyanate and polymethylene polyphenylene polyisocyanate.

Crude polyisocyanates may also be used in the compositions of the present invention, such as crude toluene diisocyanate obtained by the phosgenation of a mixture of toluene diamines or crude diphenylmethane isocyanate obtained by the phosgenation of crude diphenylmethane diamine. The preferred or crude isocyanates are disclosed in U.S. Pat. No. 3,215,652.

As mentioned above, the reinforcing graft polymers may be employed along with another polyhydroxyl containing component commonly employed in the art. Any of the polyhydroxyl containing components which are described above for use in the preparation of the graft polymers may be employed in the preparation of the polyurethane foams useful in the present invention.

Chain extending agents which may be employed in the preparation of the polyurethane foams include those compounds having at least two functional groups bearing active hydrogen atoms such as water, hydrazine, primary and secondary diamines, amino alcohols, amino acids, hydroxy acids, glycols, or mixtures thereof. A preferred group of chain extending agents include water, ethylene glycol, 1,4 butanediol and primary and secondary diamines which react more readily with the prepolymer than does water such as phenylene diamine, 1,4 cyclohexane bis (methylamine), ethylenediamine, diethylenetriamine, N (2 hydroxypropyl)ethylenediamine, N,N' di(2 hydroxypropyl)ethylenediamine, piperazine, and 2 methylpiperazine.

Any suitable catalyst may be used including tertiary amines such as, for example, triethylenediamine, N-methylmorpholine, N ethylmorpholine, diethylethanoline, N cocomorpholine,l methyl-4-dimethyIamino ethylpiperazine, 3 methoxypropy thylamine, N,N,N' trimethylisopropyl propylenediamine, 3 diethylaminopropyldiethylamine, dimethylbenzylamine, and the like. Other suitable catalysts are, for example, stannous chloride, dibutylin di 2 ethyl hexanoate, stannous oxide, as well as other organometallic compounds such as are disclosed in U.S. Pat. No. 2,846,408.

A surface active agent is generally necessary for production of high grade polyurethane foams according to the present invention, since in the absence of same, the foams collapse or contain very large uneven cells. Numerous surface active agents have been found satisfactory for the production of polyurethane foams. Nonionic surface active agents are preferred. Of these, the nonionic surface active agents such as the well known silicones have been found particularly desirable. Other surface active agents which are operative, although not preferred, include polyethylene glycol ethers of long chain alcohols, tertiary amine or alkanolamine salts of Iong chain alkyl acid sulfate esters, alkyl sulfonic esters, and alkyl arylsulfonic acids.

It has been found in the preparation of the flame retardant polyurethane foam products which have incorporated therein a reinforcing graft polymer of the invention that less flame retardant compound is necessary to impart flame retardancy. Among the flame retardants which may be employed are: pentabromodiphenyl oxide, dibromopropanol, tris(β chloropropyl)phosphate, 2,2 bis(bromoethyl) 1,3 propanediol, tetrakis(2 chloroethyl)ethylene diphosphate, tris(2,3dibromopropyl)phosphate, tris(β chloroethyl)phosphate, tris(1,2 dichloropropyl)phosphate, bis (2 chloroethyl) 2 chloroethylphosphonate, molybdenum trioxide, ammonium molybdate, ammonium phosphate, pentabromodiphenyloxide, tricresyl phosphate, hexabromocyclododecane and dibromoethyl dibromocyclohexane. The concentrations of flame retardant compounds which may be employed range from 5 to 25 parts per 100 parts of polyol mixture.

The following examples illustrate the nature of the invention. Unless otherwise indicated, all parts are expressed in parts by weight.
- Polyol A: is a glycerin, propylene oxide, ethylene oxide adduct containing 18.5% ethylene oxide, having a hydroxyl number of 35.
- Polyol B: is a glycerin, propylene oxide, ethylene oxide adduct containing 12.5% ethylene oxide and a hydroxyl number of 51.
- Polyol C: is a reaction product of one mole of Polyol E with 0.81 moles of maleic anhydride in the presence of calcium naphthenate and excess propylene oxide. The product has a typical unsaturation content of 0.5 meq/kg and a hydroxyl number of 22.
- Polyol D: is a reaction product of one mole of Polyol F with 0.96 moles of maleic anhydride in the presence of calcium naphthenate and excess propylene oxide. The product has a typical unsaturation content of 0.45 meq/kg and a hydroxyl number of 24.
- Polyol E: is a trimethylolpropane, propylene oxide, ethylene oxide adduct containing 5% ethylene oxide and a hydroxyl number of 25.
- Polyol F: is a glycerin, propylene oxide, ethylene oxide adduct containing 55% ethylene oxide and a hydroxyl number of 25.
- VAZO 52: 2,2'-azobis(2,4-dimethylpentanenitrile), a polymerization initiator made by the DuPont Co.
- VAZO 67: 2,2'-azobis(2-methylbutanenitrile), a polymerization initiator made by the DuPont Co.

As set forth in Table I below, various samples were prepared in an effort to determine which compositions gave rise to a powder and more preferably a soft powder which can be dispersed in a polyol at any desired level to impart various properties such as reinforcement, increased hardness, better cell opening and improved flame retardancy to urethane foams made using the resulting powders, for example.

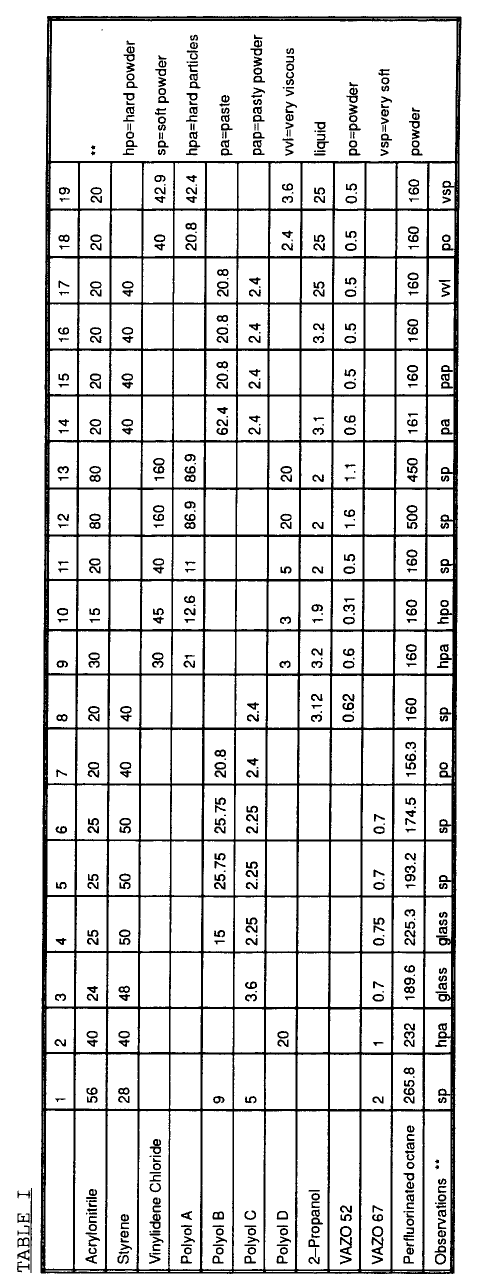

Each of the samples were prepared by charging all ingredients listed in Table I to a 3-neck 500 ml round bottom flask equipped with a reflux condenser, stirrer, nitrogen inlet, thermometer and heating mantle. The compositions were stirred and heated to reflux and allowed to react for 4 - 6 hours.

The examples wherein solid polymers were formed were then allowed to cool and thereafter any remaining clear liquid was decanted. The residue was then stripped under reduced pressure without stirring to remove any remaining perfluorinated octane and unreacted monomers. The dry powder was then removed by filtration for subsequent use as a dispersion in a polyol composition.

The material that was decanted, i.e. perfluoroctane, was substantially clear. Thus, it is contemplated that the liquid can be used without requiring purification prior to the next run. The liquid isolated during the stripping step included some unreacted monomers and/or 2-propanol. However, the composition can be easily separated using a common separatory funnel, for example. Thus, with careful process controls it is contemplated that the fluorinated solvent can be recovered and recycled indefinitely and the monomers can be completely converted in subsequent batches.

As should be readily recognized from a review of the foregoing discussion and examples, the present invention offers a process for obtaining reinforcing graft polymers which eliminate expensive processing steps such as air drying and crushing which are commonly required in order to obtain powdered product.

## Claims

1. A solid reinforcing graft polymer comprising:
the reaction product of a) an ethylenically unsaturated monomer or mixture of monomers; b) in the presence of a composition comprising a polyol including a positive amount of up to 1.6 equivalents weights of induced unsaturation per mole of polyol; c) a free radical initiator; and d) optionally, an effective amount of a reaction moderator; wherein said reaction is carried out in an inert perfluorocarbon fluid.

2. The reinforcing graft polymer of claim 1 wherein said ethylenically unsaturated monomer is selected from the group consisting of styrene, 4-methylstyrene, acrylonitrile, vinylidene chloride and mixtures thereof.

3. The reinforcing graft polymer of claim 1 wherein said polyol is prepared by the reaction mixture of an alkylene oxide with maleic anhydride in the presence of calcium napthanate and excess propylene oxide.

4. The reinforcing graft polymer of claim 1 wherein said polyol contains from about 0.45 to about 1.5 mole of unsaturation per mole of polyol.

5. The reinforcing graft polymer of claim 1 wherein said polyol component contains from about 0.9 to about 1.1 mole of unsaturation per mole of polyol.

6. The reinforcing graft polymer of claim 1 wherein the amount of ethylenically unsaturated monomer or mixture of monomers is from between about 50.0 to about 80.0 weight percent based on the total weight of the polymer.

7. The reinforcing graft polymer of claim 1 wherein the amount of ethylenically unsaturated monomer or mixture of monomers is from between about 65.0 to about 75.0 weight percent based on the total weight of the polymer.

8. The reinforcing graft polymer of claim 1 wherein said polymer is the form of a particle having a covalently bonded hydroxyl terminated polyether on the surface thereof.

9. The reinforcing graft polymer of claim 1 wherein said polymer is dispersed in said polyol.

10. A substantially solid reinforcing graft polymer prepared by polymerizing in the presence of a free radical initiator at a temperature of from about 25°C to about 180°C:
(a) an ethylenically unsaturated monomer or mixture of monomers; and
(b) a polyol containing from 0.45 to about 1.5 mole of unsaturation per mole of polyol, said unsaturation being incorporated by the reaction of an alkylene oxide with maleic anhydride, said polymerization being carried out by introducing a blend of components a) and b) into a perfluorocarbon fluid.

11. The reinforcing graft polymer of claim 10 wherein said ethylenically unsaturated monomer is selected from the group consisting of styrene, 4-methylstyrene, acrylonitrile, vinylidene chloride and mixtures thereof.

12. The reinforcing graft polymer of claim 10 wherein said polyol contains from about 0.9 to about 1.1 mole of unsaturation per mole of polyol.

13. The reinforcing graft polymer of claim 10 wherein the amount of ethylenically unsaturated monomer or mixture of monomers is from between about 50.0 to about 80.0 weight percent based on the total weight of the polymer.

14. The reinforcing graft polymer of claim 10 wherein the amount of ethylenically unsaturated monomer or mixture of monomers is from between about 65.0 to about 75.0 weight percent based on the total weight of the polymer.

15. A polyol dispersion comprising:
a) a polyether polyol composition; and
b) the reaction product of a) an ethylenically unsaturated monomer or mixture of monomers; b) in the presence of a composition comprising a polyol including a positive amount of up to 1.6 equivalents weights of induced unsaturation per mole of polyol; c) a free radical initiator; and d) optionally, an effective amount of a reaction moderator carried out in the presence of an inert perfluorocarbon fluid, wherein the reaction product is dispersed in a continuous phase of a).

16. The reinforcing graft polymer of claim 15 wherein said ethylenically unsaturated monomer is selected from the group consisting of styrene, 4-methylstyrene, acrylonitrile, vinylidene chloride and mixtures thereto.

17. The reinforcing graft polymer of claim 15 wherein said polyol is prepared by the reaction mixture of an alkylene oxide with maleic anhydride in the presence of calcium napthanate and excess propylene oxide.

18. The reinforcing graft polymer of claim 15 wherein said polyol contains from about 0.45 to about 1.5 mole of unsaturation per mole of polyol.

19. The reinforcing graft polymer of claim 15 wherein said polyol contains from about 0.9 to about 1.1 mole of unsaturation per mole of polyol.

20. The reinforcing graft polymer of claim 15 wherein the amount of ethylenically unsaturated monomer or mixture of monomers is from between about 50.0 to about 80.0 weight percent based on the total weight of the polymer.

21. The reinforcing graft polymer of claim 15 wherein the amount of ethylenically unsaturated monomer or mixture of monomers is from between about 65.0 to about 75.0 weight percent based on the total weight of the polymer.

22. The reinforcing graft polymer of claim 15 wherein said polymer is the form of a particle having a covalently bonded hydroxyl terminated polyether on the surface thereof.

23. A polyurethane foam prepared by the reaction of an organic polyisocyanate with a substantially solid reinforcing graft polymer prepared by:
introducing the reaction product of
(a) an ethylenically unsaturated monomer or mixture of monomers b) in the presence of a polyol containing from 0.45 to about 1.5 mole of unsaturation per mole of polyol, said unsaturation being incorporated by the reaction of an alkylene oxide with maleic anhydride, said reaction product being formed in a perfluorocarbon fluid.

24. The polyurethane foam of claim 23 prepared in the presence of a blowing agent.

25. The reinforcing graft polymer of claim 23 wherein said ethylenically unsaturated monomer is selected from the group consisting of styrene, 4-methylstyrene, acrylonitrile, vinylidene chloride and mixtures thereof.

26. The reinforcing graft polymer of claim 23 wherein said polyol contains from about 0.9 to about 1.1 mole of unsaturation per mole of polyol.

27. The reinforcing graft polymer of claim 23 wherein the amount of ethylenically unsaturated monomer or mixture of monomers is from between about 50.0 to about 80.0 weight percent based on the total weight of the polymer.

28. The reinforcing graft polymer of claim 23 wherein the amount of ethylenically unsaturated monomer or mixture of monomers is from between about 65.0 to about 75.0 weight percent based on the total weight of the polymer.
